**Europäisches Patentamt**

**European Patent Office**

**Office européen des brevets**

(19)

(11) Publication number: **0 008 539**
**A1**

(12) # EUROPEAN PATENT APPLICATION

(21) Application number: **79301725.2**

(22) Date of filing: **22.08.79**

(51) Int. Cl.³: **H 02 P 13/22**
**G 05 F 1/64**

(30) Priority: **23.08.78 GB 3425378**

(43) Date of publication of application:
**05.03.80 Bulletin 80/5**

(84) Designated Contracting States:
**AT BE CH DE FR IT LU NL SE**

(71) Applicant: **ASTEC INTERNATIONAL LIMITED**
**37 Caxton House 1 Duddell Street**
**Hong Kong(HK)**

(72) Inventor: **Josephson, Elliot**
**1206 Windimer Drive**
**Los Altos California 94022(US)**

(74) Representative: **Cotter, Ivan John et al,**
**D. YOUNG & CO. 9 & 10 Staple Inn**
**London WC1V 7RD(GB)**

(54) Regulated DC power supply circuits.

(57) A regulated DC power supply circuit comprises first and second transformers (T1 and T2), a transistor (Q) and trigger means to periodically cause the transistor to conduct to supply DC current to the transformers. On application of such current, flux builds up in the core of the second transformer (T2) and a winding (P2) of the second transformer (T2) maintains conduction of the transistor (Q) until the core saturates, whereupon the flux reverses and drops in value, the transistor is switched off and collapse of the field in the first transformer dumps electrical energy into a rectifier circuit (58, 60) connected to the first transformer (T1) to produce a DC output voltage. A Zener diode (66) or the like connects the DC output voltage to a winding (P3) of the second transformer (T2) to control the value to which the flux in the core of the transformer drops to after saturation, thereby to control the time taken for saturation when the transistor (Q) next conducts, and therefore the amount of energy dumped into the rectifier circuit (58, 60), in a sense to stabilize the DC output voltage at a desired value.

Fig.3

## REGULATED DC POWER SUPPLY CIRCUITS

This invention relates to regulated DC power supply circuits.

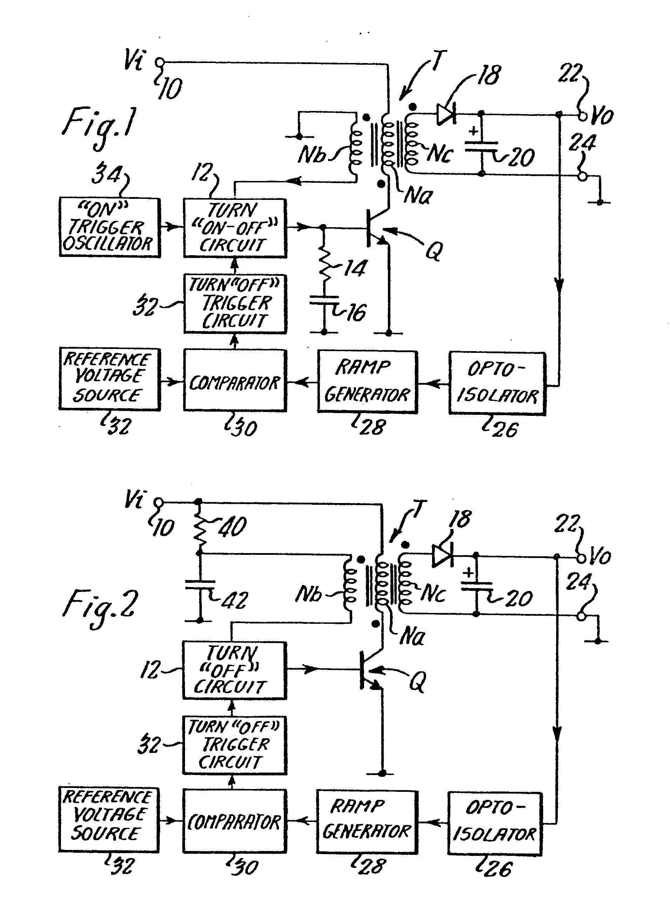

Known regulated DC power supply circuits, described hereinbelow with reference to Figures 1 and 2 of the accompanying drawings, comprise a transformer having a core and first and second windings, an electronic switch means connected to the first winding of the transformer to control the application thereto of a DC supply voltage, trigger means to apply a signal to the electronic switch means to cause it to conduct to enable current from the DC voltage supply to flow through the first winding of the transformer whereby magnetic flux builds up in the core of the transformer and collapses when the switch means is opened, a rectifier circuit connected to the second winding of the transformer to receive electrical energy caused by collapse of the magnetic field in the core of the transformer when the switch means is opened and to produce from the electrical energy a DC output voltage, and regulation means responsive to the magnitude of the DC output voltage to control opening of the electronic switch means in such a manner that the amount of energy received by the rectifier circuit is varied to compensate for any departure of the DC output voltage from a desired value.

The regulation means of the known switching type high-frequency regulated DC power supply circuits is embodied in complex electronic form, which increases the cost and reduces the reliability of the circuits. Furthermore, the electrical connection between the inputs and outputs of the known circuits provided by the regulation circuitry limits the input / output isolation, which can give rise to problems

An object of the present invention is to at least partially overcome the above disadvantage of the known circuits.

This object is achieved in that the regulation means comprises a second transformer having first, second and third windings and a threshold voltage means, closure of the electronic switch means by the trigger means enables current from the DC voltage supply to flow through the first windings of both the transformers whereby magnetic flux builds up in the cores of the transformers until the core of the second transformer saturates, whereupon the flux in the in the core of the second transformer reverses and drops in value, the second winding of the second transformer is connected to the switch means in such a manner as to maintain conduction of the switch means while the flux builds up in the core of the second transformer and to open the switch means upon said reversal of the flux, and the threshold voltage means connects the DC output voltage to the third winding of the second transformer in a manner to control the value to which the flux in the core of the second transformer drops upon saturation of the core thereof, thereby to control the time taken for the core of the second transformer to saturate upon receipt of the subsequent signal from the trigger means, and therefore the amount of electrical energy received by the rectifier circuit after receipt of the subsequent signal from the trigger means, in a sense to compensate for any departure of the DC output voltage from the desired value.

In embodiments of the invention described hereinbelow, the inputs and outputs of the circuits are coupled to effect regulation solely by magnetic coupling in the second transformer, whereby superior input/output isolation can be provided; and the number of electronic components to provide regulation is greatly reduced as compared to known circuits of similar type.

A regulated DC power supply circuit in accordance with the invention may be of an externally-triggered or 'driven' configuration, that is to say the trigger means may comprise an oscillator arranged to periodically apply signals to the electronic switch means. Alternatively, a circuit in accordance with the invention may be of a self-oscillating or 'free-running' configuration, in which case the trigger means may comprise a third feedback winding on the first transformer to supply signals to the electronic switch means.

A regulated DC power supply circuit in accordance with the invention may be embodied as a DC-DC circuit, in which case the DC voltage supply will be an external supply. Alternatively, a circuit in accordance with the invention may be an AC-DC power supply, in which case it may incorporate an internal unregulated rectifier circuit to provide the DC voltage supply from an external AC input voltage supply.

The electronic switch means is preferably a transistor. The transistor is preferably connected in series with the first windings of the first and second transformers to cause current from the DC supply simultaneously to flow through them upon receipt of a signal from the trigger means. The second winding of the second transformer is preferably connected to the base and emitter of the transistor, possibly in series with a diode, such that on switching on of the transistor by the application of a signal thereto from the trigger means a voltage induced in the second winding of the second transformer clamps the transistor on. Once the transistor is clamped on, the base-emitter voltage of the transistor is applied across the second winding of the second transformer to produce a linear increase in the flux in the core of the second transformer till the transformer saturates, and on reversal of the flux a voltage induced in the second winding of the second transformer switches the transistor off.

The threshold voltage means may be a variable threshold voltage means to enable the DC output voltage to be varied. The threshold voltage means may in fact comprise a Zener diode, which may be a programmable Zener diode to enable the above mentioned variation of the DC output voltage to be provided. An inductor may be provided in series with the threshold voltage means to prevent feedback to the second transformer of any residual current pulses on the DC output voltage.

The invention will now be further described, by way of example, with reference to the accompanying drawings, in which:

Figure 1 is a schematic circuit diagram of a known high-frequency DC-DC regulated power supply circuit of the flyback type and employing an externally-triggered or driven configuration;

Figure 2 is a schematic circuit diagram of a circuit similar to that of Figure 1, but employing a self-oscillating or free-running configuration;

Figure 3 is a schematic circuit diagram of a high-frequency DC-DC regulated power supply circuit, in accordance with the invention, of an externally-triggered or driven configuration; and

Figure 4 is a schematic circuit diagram of a high-frequency DC-DC regulated power supply circuit, in accordance with the invention, of a self-oscillating or free-running configuration.

The known regulated power supply circuit shown in Figure 1 comprises a transformer T having respective windings Na, Nb and Nc. An external input voltage supply Vi is connected to an input terminal 10 so as to be connected across the series combination of the winding Na and the collector-emitter path of a transistor Q.

The winding Nb is connected, as shown, to an input of a turn "on-off" circuit 12, an output of which is connected to the base of the transistor Q. A resistor 14 and a capacitor 16 are connected in series between the base and emitter of the transistor Q.

A rectifier circuit comprising a diode 18 and a smoothing capacitor 20 is connected, as shown, to the winding Nc, whereby a DC output voltage Vo is available on output terminals 22,24. An opto-isolator 26 has an input connected to the terminal 22 and an output connected to an input of a ramp generator 28. An output of the ramp generator 28 is connected to one input of a comparator 30. Another input of the comparator 30 is connected to a reference voltage source 32, and an output of the comparator 30 is connected to an input of a turn "off" trigger circuit 32, an output of which is connected to a second input of the turn "off" circuit 12. The circuit 12 is further connected to a turn "on" trigger oscillator 34.

The circuit shown in Figure 1 operates in the following manner. Assume that, initially, the transistor Q is off, whereby its collector is at the voltage Vi.. The trigger oscillator 34 then supplies a trigger pulse to the base of the transistor Q via the circuit 12, which initiates conduction of the transistor Q. As the voltage at the collector of the transistor Q falls, there is a change in magnetic flux in the core of the transformer T. The winding Nb, which acts as a feedback winding, is so phased and connected that the voltage induced therein as a result of the flux change in the transformer caused by conduction of the transistor Q1 applies more base drive to the transistor Q so that the transistor is rapidly driven into a fully saturated state. A voltage induced in the winding Nc of the transformer T by the flux change is so phased that the voltage reverse biases the diode 18 whereby it does not conduct. With the transistor Q switched fully on, the voltage drop across the winding Na is equal to the DC supply voltage Vi less the collector-emitter saturation voltage of the transistor Q. The current through the winding Na and the transistor Q therefore rises linearly. In the absence of any regulation, the current rise through the winding Na would continue until some non-linearity, such as the transistor Q coming out of saturation at some current level, or the core of the transformer becoming saturated, would limit its rise. Any of these factors would initiate a rise in the collector voltage of the transistor Q, the induced voltage in the winding Nb then serving to reverse bias the base of the transistor Q to drive it rapidly into an off condition. As a result, the magnetic field in the core of the transformer T would start to collapse, leading to a voltage being induced in the winding Nc which would forward bias the diode 18 whereby the magnetic energy of the magnetic field in the transformer T would be converted into electrical energy which would be transferred or "dumped" into the capacitor 20 via the winding Nc and the diode 18. This cycle would then be repeated, each cycle being initiated by the trigger oscillator 34, and the voltage on the capacitor 20 would rise. This voltage would continue increasing, unless limited.

By sensing the output voltage and controlling the amount of magnetic energy "dumped" into the capacitor 20, the DC output voltage Vo is regulated. Regulation is achieved in the following manner. The DC output voltage Vo is sampled by the opto-isolator 26, which is provided to achieve isolation between the input and output of the circuit. The output voltage from the opto-isolator 26, which is proportional to the DC output voltage Vo, is used to generate a ramp waveform in the ramp generator 28. The ramp waveform is fed to the comparator 30 which compares it with a fixed reference voltage from the source 32, which may comprise a Zener diode or the like, the reference voltage having the required voltage and temperature stability. The above-described feedback regulation circuit therefore converts the DC output voltage Vo into a timed reference pulse which is isolated by the opto-isolator 26. This pulse is applied to the base of the transistor Q via the circuits 32 and 12 to cut off the base current from the winding Nb of the transformer T. Accordingly, instead of natural non-linearity determining when the transistor Q is turned off and hence determining the amount of energy dumped into the capacitor 20, turning off of the transistor will be determined by the above-described feedback regulation circuit which compares the DC output voltage Vo with a reference voltage. The output voltage Vo would therefore be kept close to the reference voltage or a proportion thereof because, as the output voltage increases, the off trigger pulse is supplied earlier, to limit the rise of current in the winding Na and therefore to limit, or control, the amount of energy dumped into the capacitor 20. If the output voltage Vo falls, the off trigger pulse will be delayed, increasing the energy dumped into the capacitor 20 and restoring the output voltage to its desired value.

The resistor 14 and the capacitor 16 serve as a damping network to ensure that any ringing in the winding Nb does not cause triggering on of the transistor Q at some undesired time.

The circuit shown in Figure 2 is in many respect the same as that shown in Figure 1 and its construction and operation will only be described in so far as it differs. The essential difference between the circuit of Figure 2 and that of Figure 1 is that the circuit of Figure 2 is triggered on in a different way in that it is of a self-oscillating or free-running nature rather than of an externally-triggered or driven configuration. More specifically, in the circuit of Figure 2, the "on" trigger oscillator 34 of the circuit of Figure 1 is removed and the upper end of the coil Nb, instead of being connected to ground, is connected to the junction of the series combination of a resistor 40 and capacitor 42 connected between the input supply voltage terminal 10 and ground.

In the circuit of Figure 2, triggering on of the transistor Q is effected in the following manner. The transistor Q is driven into conduction and held on by a voltage induced in the winding Nb, such action causing negative charging of the capacitor 42. When the transistor Q is turned off, which is accomplished in the same way as in the circuit of Figure 1, it is held off by the negative charge on the capacitor 42. The capacitor 42 then charges positively via the resistor 40 and continues charging towards the DC input voltage supply level Vi. When the voltage across the capacitor 42 exceeds the base-emitter voltage of the transistor Q, the transistor Q is turned on whereby the on cycle of the circuit is initiated. As in the circuit of Figure 1, regulation is achieved by the off cycle being initiated by the feedback regulation circuit, which compares the DC output voltage Vo to the reference voltage from the source 32, and then generates a correctly timed on pulse.

In the circuits of Figures 1 and 2, the required isolation and regulation is performed by means of quite complex feedback and control circuitry employing semi-conductor devices, whereby the component count is high. The high component count increases costs and reduces reliability.

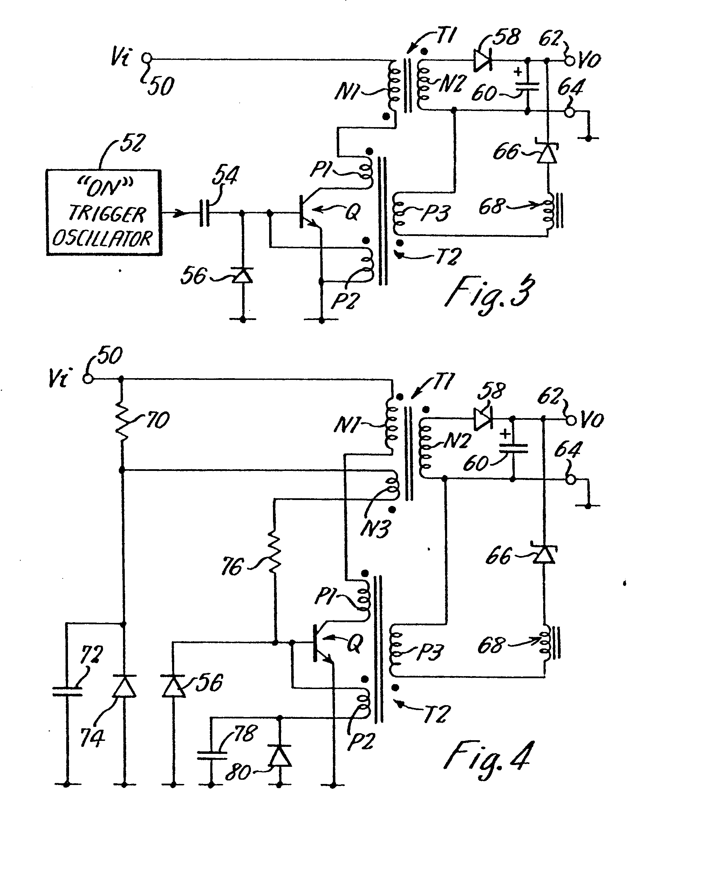

There will now be described, with reference to Figures 3 and 4, circuits in accordance with the invention which provide functions similar to those provided by the known circuits of Figures 1 and 2, respectively, yet with a considerably lower component count and also in a manner that enables good input/output isolation to be effected.

Figure 3 shows a high-frequency DC-DC regulated power supply circuit of an externally-triggered or driven configuration. The circuit comprises a transformer T1 having first and second windings N1 and N2 and a second transformer T2 having first, second and third windings P1, P2 and P3. An external DC voltage supply is connected to a terminal 50 such that the windings N1 and P1 and the collector-emitter path of a transistor Q are connected in series across the DC input supply voltage Vi.

An "on" trigger oscillator 52, similar to the oscillator 34 of Figure 1, is connected to the base of the transistor Q via a capacitor 54. A diode 56 and the winding P2 are connected in parallel between the base and the emitter of the transistor Q, as shown.

A rectifier circuit constituted by a diode 58 and a smoothing capacitor 60 is connected to the winding N2 as shown, the rectifier circuit having output terminals 62,64 across which is developed a regulated DC output voltage Vo. The winding P3 is connected across the output terminals 62,64 via a Zener diode 66 and an inductor 68 connected in series with a lead extending between the terminal 62 and one end of the winding P3.

The circuit of Figure 3 operates in the following manner. Assume that, initially, the transistor Q is off. The trigger oscillator 52 then supplies a positive pulse to the base of the transistor Q via the capacitor 54, which turns the transistor on. The collector current of the transistor Q and therefore the current flowing through the windings N1 and P1 rises. This gives rise to the induction in the winding P2 of a voltage, the winding P2 being so phased that the voltage rapidly causes switching on of the transistor Q and maintains it in a fully saturated state as the current in the winding N1 continues to rise. Due to the base-emitter forward bias characteristic of the transistor Q, which appears as a diode, the voltage across the winding P2 is clamped at the base-emitter forward voltage, whereby magnetic flux density in the core of the transformer T2 rises linearly due to the constant voltage across the winding P2. The winding P2 has more turns than the winding P1, whereby the clamped transistor base-emitter voltage across the winding P2 causes a controlled, linear increase in the flux density in the core of the transformer T2 until the core saturates. Upon saturation, the flux in the core of the transformer T2 reverses and collapses, the flux dropping to a residual value (see below). The reverse and collapse of the flux causes the voltage across the winding P2 to reverse, whereby a negative voltage pulse is supplied to the base of the transistor Q to rapidly turn it off. During this negative "kick-back" of the winding P2, as the current flows through the diode 56, the flux in the core of the transformer T2 is, as mentioned above, reset from the saturated maximum flux density to a residual value determined as explained below.

Whilst the transistor Q was turned on, the current through the winding N1 built up magnetic flux in the core of the transformer T1. When, as just explained, the transistor Q is then turned off, the magnetic field of the transformer T1 collapses, whereby the magnetic energy of the field is converted to electrical energy and transferred or "dumped" through the appropriately phased winding N2 and the rectifier 58 into the capacitor 60.

During subsequent cycles, the voltage across the capacitor 60 increases until the Zener diode 66 conducts. The consequent DC current flowing through the winding P3 opposes the above mentioned collapse of the flux in the core of the transformer T2. Accordingly, due to the winding P3, the flux in the core of the transformer T2 is in fact reset to a residual value which is proportional to the ampere-turns of the winding P3. The more positive this residual flux density, the shorter is the time required for the core of the transformer to saturate during the next on cycle of the transistor Q. As a result of the reduction in the time for saturation to occur, the peak current through the winding N1 during the next cycle is of a lower value, whereby so also is the amount of energy dumped into the capacitor 60. Consequently, if the output voltage Vo decreases, for instance due to a change in load and/or a change in the DC input supply voltage Vi, the current through the winding P3 decreases rapidly as the output voltage Vo approaches the cut-off or breakdown voltage of the Zener diode 66, whereby the above mentioned residual flux density decreases and the on period increases, increasing the energy delivered to the capacitor 60 on each cycle and therefore increasing the output voltage Vo to the required regulated value set by the Zener diode 66.

The inductor 68 provides a high AC impedance in series with the winding P3 to eliminate current pulses from the DC current loop travelling through the winding P3, whereby smooth control is provided. In some cases the inductor 68 may not be needed.

As will be appreciated from the foregoing explanation, the circuit of Figure 3 compensates for DC supply voltage and output load variations and maintains the output voltage Vo close to the breakdown voltage of the Zener diode 66.

The circuit of Figure 4 is in many respect similar to that of Figure 3 and will therefore only be described in so far as it differs therefrom. The major difference between the circuit of Figure 4 and that of Figure 3 is that the circuit of Figure 3 is of a self-oscillating or free-running nature rather than being of an externally-triggered or driven nature. In the circuit of Figure 4, a third, feedback winding N3 is provided on the transformer T1. One end of the winding N3 is connected via a resistor 70 to the DC input voltage supply terminal 50 and is connected via a parallel combination of a capacitor 72 and a diode 74 to ground. The other end of the winding N3 is connected via a resistor 76 to the base of the transistor Q. The "on" trigger oscillator 52, provided in Figure 3, is omitted. The parallel combination of a capacitor 78 and a diode 80 is connected between the end of the coil P2 remote from the base of the transistor Q and ground, that is in series with the winding P2.

The operation of the circuit of Figure 4 differs from the operation of the circuit of Figure 3 as follows. The winding P2 is clamped, in this case, at a voltage equal to the sum of the base-emitter voltage of the transistor Q and the forward voltage of the diode 80.

The on cycle is triggered by the third, feedback winding N3 of the transformer T1. The winding N3 charges the capacitor 72 negatively whilst the transistor Q is on. This negative voltage reverse biases the base-emitter junction of the transistor Q thereby holding the transistor off. When the capacitor 72 charges positively via the resistor 70, towards the DC input supply voltage Vi, as the voltage on the capacitor exceeds the base-emitter voltage of the transistor Q the transistor is turned on to initiate the on period. The transistor Q is turned off as described with reference to Figure 3.

The circuit of Figure 4 is therefore self-oscillating. There is some variation in frequency as the output voltage Vo is held closely to the breakdown voltage of the Zener diode 66 as the DC input supply voltage Vi and/or the output loading vary.

An advantage of the circuits of Figures 3 and 4, as compared to those of Figures 1 and 2, is the substantially reduced component count provided by using "saturated current control" instead of control by means of quite complex electronic circuitry.

Another advantage of the circuits of Figures 3 and 4, as compared to those of Figures 1 and 2, is that in Figures 3 and 4 the output circuit is completely isolated from the input circuit, the only coupling between them to effect regulation being magnetic coupling via the transformer T2. As is known to those skilled in the art, input/output isolation (and also input/shield and output/shield isolation) is of paramount importance when dealing with high input voltages. This applies in particular to mains operated power supply circuits in the case of which, in many countries, strict isolation requirements must be satisfied before the power supply circuit or any product incorporating the power supply circuit can be accepted or sold. Using the semi-conductor approach, generally using an opto-isolator, a limit to isolation voltages, currently around 4 kV RMS, applies. Since some countries require isolation voltages in excess of this figure, the circuits of Figures 3 and 4 are advantageous in that they can be designed so as to achieve isolation voltages of up to 10 kV without compromising performance.

To achieve good isolation in a transformer, a compromise is necessary between the need for close magnetic coupling between the windings and the heavy insulation or physical separation of windings which must be effected to achieve the necessary isolation.

With reference to both Figures 3 and 4, the windings P1 and P2 must be closely coupled, but since they are both common on the input, they can readily be designed for maximum coupling. The winding P3 is connected in the output circuit, but since it only has to couple a level of magnetic flux density into the core of the transformer T2, it does not have to be closely coupled to the windings P1 and P2. The winding P3 can therefore be designed for maximum isolation from the windings P1 and P2, but sufficiently well coupled to the core of the transformer T2 to couple the magnetic flux density depending on the DC ampere-turns through the winding P3. The transformer T1, in both Figures 3 and 4, serves as a power transformer and conventional isolation techniques can be employed, whereby isolation can be achieved with little compromise as to performance.

The invention can, of course, be embodied in various other ways than those described above by way of example.

For instance, the Zener diode 66 can be replaced by any similar element or circuit which will rapidly increase the current flowing through the winding P3 at a predetermined threshold voltage. This voltage may be adjustable, for instance by using a programmable Zener diode, whereby the regulated output voltage Vo of the circuits can be adjusted.

The circuits of Figures 3 and 4 can readily be adapted to function as AC-DC power supplies by the incorporation of an internal, unregulated rectifier circuit of which the output is connected to the terminal 50 to supply the voltage Vi and the input is connected to an external AC mains supply. The internal, unregulated rectifier circuit may comprise, for example, a bridge rectifier having a smoothing capacitor connected across its output terminals. In this case, of course, the regulation compensates for changes in the DC output voltage caused by load variations and/or variations in the AC supply voltage.

Further rectifier circuits could be connected to further windings on the transformer T1, in the case of Figure 3 or Figure 4 or any of the above-mentioned modifications thereof, to provide multiple DC output voltages of one or both polarities.

Although the invention has been described above with reference to Figures 3 and 4 as being applied to flyback type power supply circuits, it can be incorporated in various other regulated DC power supply circuits. In all cases, a feedback pulse whose duty cycle varies with the output voltage is sensed, this time variable pulse being used to control the primary switching or "chopping".

The circuits of Figures 3 and 4 can, of course, be readily adapted to work with a negative DC supply voltage, since the input and output are fully electrically isolated. Alternatively, in the case of a negative DC supply voltage, a p-n-p transistor could be employed with the other appropriate circuit elements being inverted.

CLAIMS

1. A regulated DC power supply circuit comprising a transformer (T1) having a core and first and second windings (N1, N2),an electronic switch means (Q) connected to the first winding (N1) of the transformer (T1) to control the application thereto of a DC supply voltage (Vi), trigger means to apply a signal to the electronic switch means to cause it to conduct to enable current from the DC voltage supply (Vi) to flow through the first winding (N1) of the transformer (T1) whereby magnetic flux builds up in the core of the transformer and collapses when the switch means (Q) is opened, a rectifier circuit (58, 60) connected to the second winding (N2) of the transformer (T1) to receive electrical energy caused by collapse of the magnetic field in the core of the transformer (T1) when the switch means is opened and to produce from the electrical energy a DC output voltage (Vo), and regulation means responsive to the magnitude of the DC output voltage (Vo) to control opening of the electronic switch means (Q) in such a manner that the amount of energy received by the rectifier circuit (58, 60) is varied to compensate for any departure of the DC output voltage from a desired value, characterised in that the regulation means comprises a second transformer (T2) having first, second and third windings (P1, P2 and P3) and a threshold voltage means (66), closure of the electronic switch means (Q) by the trigger means enables current from the DC voltage supply (Vi) to flow through the first windings (N1, P1) of both the transformers (T1, T2) whereby magnetic flux builds up in the cores of the transformers until the core of the second transformer (T2) saturates, whereupon the flux in the core of the second transformer reverses and drops in value, the second winding (P2) of the second transformer (T2) is connected to the switch means (Q) in such a manner as to maintain conduction of the switch means while the flux builds up in the core of the second transformer (T2) and to open the switch means upon said reversal of the flux, and the threshold voltage means (66) connects the DC output voltage (Vo) to the third winding (P3) of the second transformer (T2) in a manner to control the value to which the flux in the core of the second transformer (T2) drops upon saturation of the core thereof, thereby to control the time taken for the core of the second transformer (T2) to saturate upon receipt of a subsequent signal from the trigger means, and therefore the amount of electrical energy received by the rectifier circuit (58, 60) after receipt of the subsequent signal from the trigger means, in a sense to compensate for any departure of the DC output voltage (Vo) from the desired value.

2. A regulated DC power supply circuit according to claim 1, wherein the trigger means comprises an oscillator (52) arranged to periodically supply signals to the electronic switch means (Q).

3. A regulated DC power supply circuit according to claim 1, wherein the trigger means comprises a third feedback winding (N3) on the first mentioned transformer to supply signals to the electronic switch means (Q).

4. A regulated DC power supply circuit according to claim 3, wherein the trigger means further comprises a resistor (70) and a capacitor (72) connected in series such that, in use, they are connected in series across the DC voltage supply (Vi), one end of the third feedback winding (N3) being connected to the electronic switch means (Q) and the other end being connected to the junction of the resistor (70) and capacitor (72).

5. A regulated DC power supply circuit according to any one of claims 1 to 4, wherein the electronic switch means (Q) is a transistor connected in series with the first windings (N1, P1) of the first-mentioned and second transformers (T1, T2) to cause current from the DC voltage supply (Vi) simultaneously to flow through them upon receipt of a signal from the trigger means.

6. A regulated DC power supply circuit according to claim 5, wherein the second winding (P2) of the second transformer (T2) is connected to the base and emitter of the transistor (Q) such that on switching on of the transistor by the application of a signal thereto from the trigger means a voltage induced in the second winding (P2) of the second transformer (T2) clamps the transistor (Q) on, the base-emitter voltage of the clamped-on transistor (Q) is thereafter applied across the second winding (P2) of the second transformer (T2) to produce a linear increase in the flux of the core of the second transformer (T2) till the transformer saturates, and on said reversal of the flux a voltage induced in the second winding (P2) of the second transformer (T2) switches the transistor (Q) off.

7. A regulated DC power supply circuit according to claim 6, wherein the second winding (P2) of the second transformer (T2) is connected to the base and emitter of the transistor in series with a diode (80) such that the sum of the base-emitter voltage and the forward voltage of the diode (80) is applied across the second winding (P2) of the second transformer (T2) when the transistor has been clamped on.

8. A regulated DC power supply circuit according to any one of the preceding claims,wherein the threshold voltage means (66) is a variable threshold voltage means to enable the DC output voltage (Vo) to be varied.

9. A regulated DC power supply circuit according to claim 8, wherein the threshold voltage means is a programmable Zener diode.

10. A regulated DC power supply circuit according to any one of the preceding claims, wherein an inductor (68) is connected in series with the threshold voltage means (66) to prevent feedback to the second transformer (T2) of any residual current pulses on the DC output voltage (Vo).

Fig.1

Fig.2

0008539

2/2

Fig.3

Fig.4

**European Patent Office**

**EUROPEAN SEARCH REPORT**

Application number

EP 79 30 1725

| | | DOCUMENTS CONSIDERED TO BE RELEVANT | | CLASSIFICATION OF THE APPLICATION (Int. Cl. 3) |
|---|---|---|---|---|
| Category | | Citation of document with indication, where appropriate, of relevant passages | Relevant to claim | |
| | | FR - A - 2 354 659 (CHRISTIAN ROUSING A/S) <br> * Page 2, line 6 - page 3, line 30; figures * | 1,2,5, 6,8 | H 02 P 13/22 <br> G 05 F 1/64 |
| | | US - A - 4 130 780 (I. BAN et al.) <br> * Figure 4 * | 3-5 | |
| A | | IBM TECHNICAL DISCLOSURE BULLETIN, vol. 13, no. 9, February 1971, New York (US) <br> A.S. PASQUAK: "Self oscillating DC to DC converter", pages 2767-2768. <br> * Figure * | 1 | TECHNICAL FIELDS SEARCHED (Int.Cl.) <br><br> H 02 P 13/22 <br> H 02 M 3/335 <br> H 02 M 3/33 |
| A | | US - A - 2 272 794 (L.L. DE KRAMO-LIN) <br> * Page 2, left-hand column, line 48 - right-hand column, line 20; figure * | 3,4 | |
| A | | US - A - 3 987 355 (G.R. HULL) <br> * Figure 9 * | 1 | |
| A | | US - A - 3 660 724 (J.K. BERGER) <br> * Figure * | 1,2,5, 6 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 30-11-1979 | EXELMANS |

EPO Form 1503.1 06.78